# EUROPEAN PATENT APPLICATION

(11) **EP 4 417 472 A1**
(43) Date of publication of application: **21.08.2024**
(21) Application number: 24156706.4
(22) Date of filing: 08.02.2024
(51) Int. Cl.: B60S 1/56, G02B 27/00, B60S 1/52, G03B 17/08

(54) **CAMERA WASHER ASSEMBLY AND DEVICE**

(30) Priority: 17.02.2023 GB 202302331
(71) Applicant: Wartsila Guidance Marine Ltd, Leicester, Leicestershire LE19 1QP (GB)
(72) Inventor: MORGAN, Jeffery, Leicester (GB)
(74) Representative: Froud, Christopher Andrew

(57) **Abstract**

There is provided a washer assembly (100) for a camera (160) mounted on a vessel. The washer assembly (100) comprises a first part (110) connectable to a fluid supply, a second part (120) comprising a nozzle (150) configured to spray fluid towards an optical surface (170) of the camera (160), and a mounting part (130) couplable to a housing (162) of the camera. The first part (110) and the second part (120) are configured to be removably coupled via the mounting part (130) wherein, when coupled, the first part and the second part abut opposing faces of the mounting part (130) and a continuous duct (140) is formed between the first part (110) and the second part (120).

## Description

### Field of the Invention

The invention relates to a washer assembly for a camera mounted on a vessel, and to a device for washing a camera mounted on a vessel.

### Background

Cameras are often mounted on vessels to provide images of the surrounding environment. Such images can be transmitted, for example, to the Captain on the deck of the vessel to aid with navigation and manoeuvring of the vessel.

To help provide clear, reliable images, washer nozzles can be provided that spray fluid towards a camera lens, in order to keep the camera lens clean and substantially free of debris. However, prior art washer nozzles suffer from drawbacks such as instability of the washer nozzle relative to the camera, which can cause the washer nozzle to lose alignment with the camera lens (e.g., if the washer nozzle is struck by a wave), thus reducing the effectiveness of the washer nozzle in keeping the camera lens clean.

It is an aim of the present invention to improve upon drawbacks associated with prior art washer nozzles.

### Summary

According to an aspect of the invention, there is provided a washer assembly for a camera mounted on a vessel. The washer assembly comprises a first part connectable to a fluid supply. The washer assembly also comprises a second part comprising a nozzle configured to spray fluid towards an optical surface of the camera. The optical surface may be a lens or optical window of the camera. The washer assembly also comprises a mounting part couplable to a housing of the camera.

The first part and the second part are configured to be removably coupled via the mounting part. When coupled, the first part and the second part abut opposing faces of the mounting part and a continuous duct is formed between the first part and the second part.

By abutting opposing faces of the mounting part, the first and second parts are held in an aligned position, providing a more robust washer assembly that is less prone to misalignment, more resistant to impact, and that ensures fluid can be reliably and consistently sprayed towards the optical surface of the camera.

Optionally, the opposing faces of the mounting part comprise a surface facing towards the camera and a surface facing away from the camera.

Optionally, the second part comprises a first face configured to abut the surface of the mounting part facing towards the camera and a second face configured to abut a portion of the housing adjacent to the camera. In this way, the second part is maintained in the aligned position, thereby ensuring that fluid sprayed from the nozzle of the second part is accurately and repeatably sprayed towards the optical surface of the camera.

Optionally, the second part is widest where the second face of the second part meets the first face of the second part. In this way, the stability of the second part is improved.

Optionally, the second face of the second part comprises a pair of wings that extend either side of the surface of the mounting part facing towards the camera. The pair of wings may contact a portion of the housing adjacent to the optical surface of the camera. In this way, the stability of the second part is further improved such that any rocking motion of the second part is substantially reduced, thereby maintaining repeatable and consistent spraying of fluid towards the optical surface of the camera.

Optionally, the first part comprises a first face configured to abut the surface of the mounting part facing away from the optical surface of the camera, and a second face configured to abut a second part of the housing of the camera. By abutting a surface of the mounting part and a portion of the housing of the camera, the surface area that the first part is seated against is increased, thereby improving the stability of the first part and allowing for fluid to be reliably delivered from the first part to the second part.

Optionally, the first part has a protrusion configured to sit on a ledge of a camera housing. In this way, the stability of the first part is further improved.

Optionally, the continuous duct is defined by a first internal fluid channel formed through the first part, a second internal fluid channel formed through the second part, and an aperture formed through the mounting part. By forming the continuous duct through the aperture in the mounting part (which is coupled to the camera housing), the robustness of the washer assembly is improved.

Optionally, the first part comprises a plug containing at least a portion of the first internal fluid channel, and the second part comprises a socket, the socket comprising at least a portion of the second internal fluid channel. Optionally, the plug is configured to be inserted through the aperture formed through the mounting part into the socket to removably couple the first part and the second part via the mounting part. In this way, the washer assembly can be straightforwardly and securely connected.

Optionally, the washer assembly further comprises sealing means arranged to form a fluid-tight seal between the plug and the socket.

Optionally, the sealing means is disposed at least partially within a circumferential groove in either a surface of the plug or a surface of the socket. In this way, a fluid-tight seal is formed between the plug and the socket.

Optionally, the socket has an end cap with the nozzle extending from the end cap. The end cap may be curved in order to direct fluid flow towards the nozzle.

Optionally, the second part comprises a collar configured to sit within the aperture of the mounting part. The collar allows for the second part to be reliably and securely located against the mounting part, such that relative lateral movement between the second part and the mounting part is prevented.

Optionally, the first part is removably connectable to a hose and is shaped to direct fluid flow received from the hose towards the second part.

Optionally, the washer assembly further comprises a filter for filtering fluid flow received from the hose.

Optionally, the first part and/or the second part are formed from 3D printed material, preferably stainless steel.

According to an aspect of the invention, there is provided a device for washing a camera mounted on a vessel. The device comprises a first part connectable to a fluid supply, and a second part comprising a nozzle configured to spray fluid towards an optical surface of the camera. The first part and the second part are configured to be removably coupled abutting opposing faces of a mounting part on a camera such that continuous duct for conveying fluid is formed between the first part and the second part.

### Brief Description of the Drawings

The invention will now be described, by way of example only, with reference to the accompanying drawings, in which:
Figure 1 is an exploded view of a first part and a second part of a washer assembly;
Figure 2 is an exploded perspective view illustrating the first part and the second part prior to coupling;
Figure 3 is a perspective view showing the washer assembly in an assembled configuration mounted to a vessel camera;
Figure 4 is side view showing a first part of the washer assembly coupled to a second part of the washer assembly;
Figure 5 is a close-up perspective view of the first part of the washer assembly; and
Figure 6 is a close-up perspective view of the second part of the washer assembly.

In the drawings, like parts are denoted by like reference numerals.

### Detailed Description

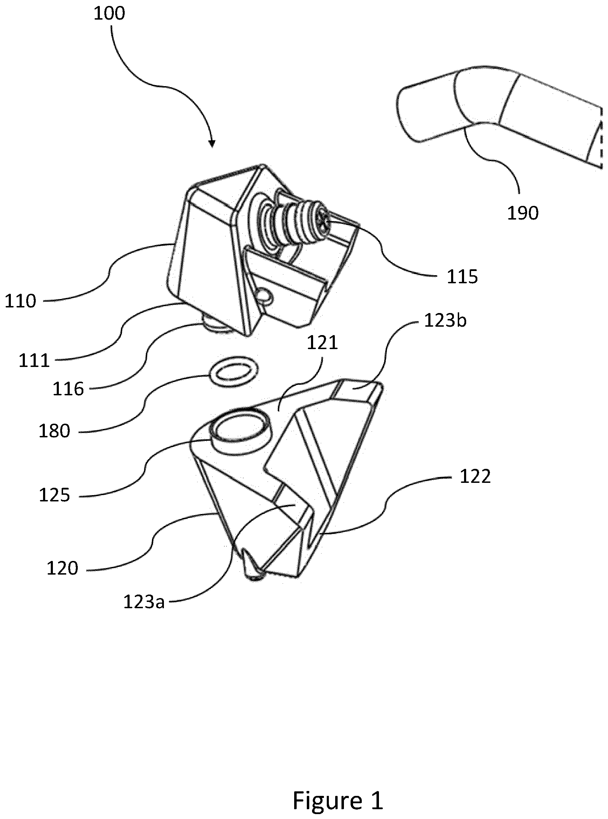

Figure 1 is an exploded diagram illustrating components of a washer assembly 100 for spraying fluid onto a lens or optical window of a camera to remove any dirt or debris that might otherwise obscure camera images.

The washer assembly 100 has a first part 110 that is arranged to be removably coupled with a second part 120. A plug 116 extends from a first face 111 of the first part 110 and is received by a socket 125 receding into a first face 121 of the second part 120 when the first part 110 and the second part 120 are coupled together. The first part 110 may be connected to a fluid reservoir via a tube 190. When the first part 110 and the second part 120 are connected together, fluid from tube 190 flows through the first part 110 to the second part 120 and is sprayed from a nozzle in the second part 120 onto the camera.

Sealing means 180 may be interposed between the plug 116 and the socket 125 as the first part 110 and the second part 120 are removably coupled together. The sealing means 180 ensures that fluid does not leak between the first internal fluid channel 142 and the second internal fluid channel 144. The sealing means 180 may be an O-ring or other suitable means for providing a seal to prevent leakage between the first part 110 and the second part 120.

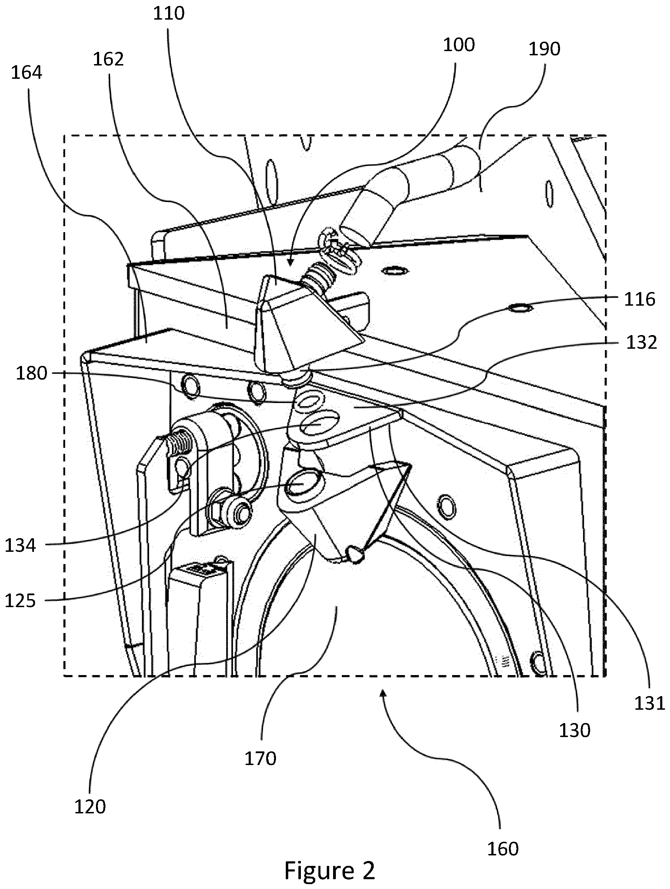

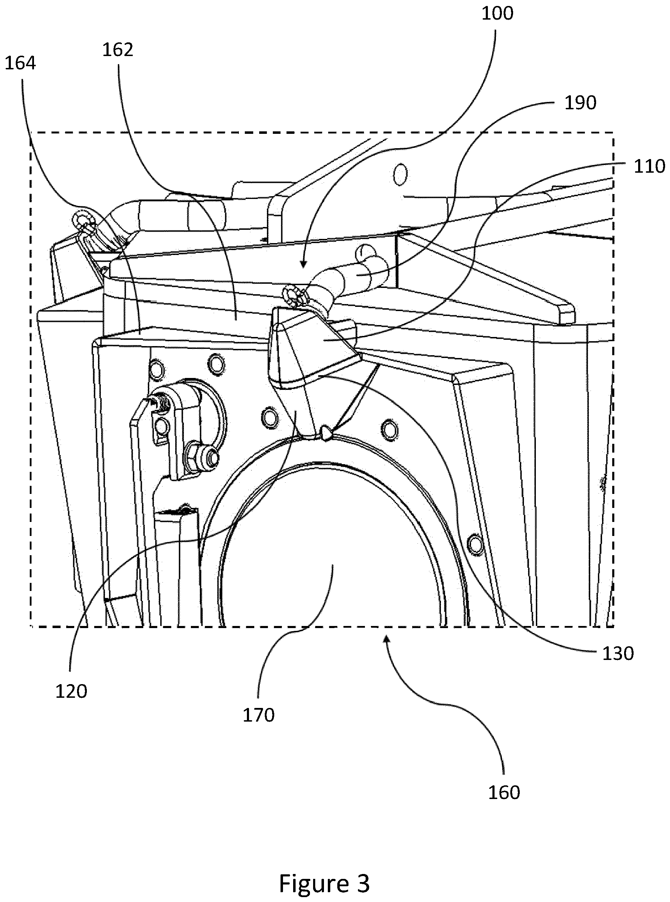

Figures 2 and 3 illustrate how the components of the washer assembly 100 shown in Figure 1 can be removably coupled to a housing 162 of a camera 160 via a mounting part 130 that is welded (or otherwise fastened) to the housing 162, and extends out from the housing 162 above a lens or optical window 170 of the camera 160.

The mounting part 130 has a surface 131 that faces towards the camera 160. The mounting part 130 also has a surface 132 (opposing the surface 131 that faces towards the camera 160) that faces away from the camera 160. There is an aperture 134 in the mounting part 130 between the surface 131 that faces towards the camera 160 and the surface 132 that faces away from the camera 160. The first part 110 and second part 120 are removably coupled to each other through the aperture 134 in the mounting part 130: the first face 111 of the first part 110 is butted up against the surface 132 of the mounting part 130 and the plug 116 (extending from the first part 110) passes through the aperture 134; and the first face 121 of the second part 120 is butted up against the surface 131 (that faces towards the camera 160) of the mounting part 130 and the socket 125 in the second part 120 receives the plug 116. When the plug 116 of the first part 110 passes through the aperture 134 and into the socket 125 of the second part 120, stability of the washer assembly 100 is increased since lateral motion of the first part 110 and second part 120 with respect to each other and to the mounting part 130 is inhibited.

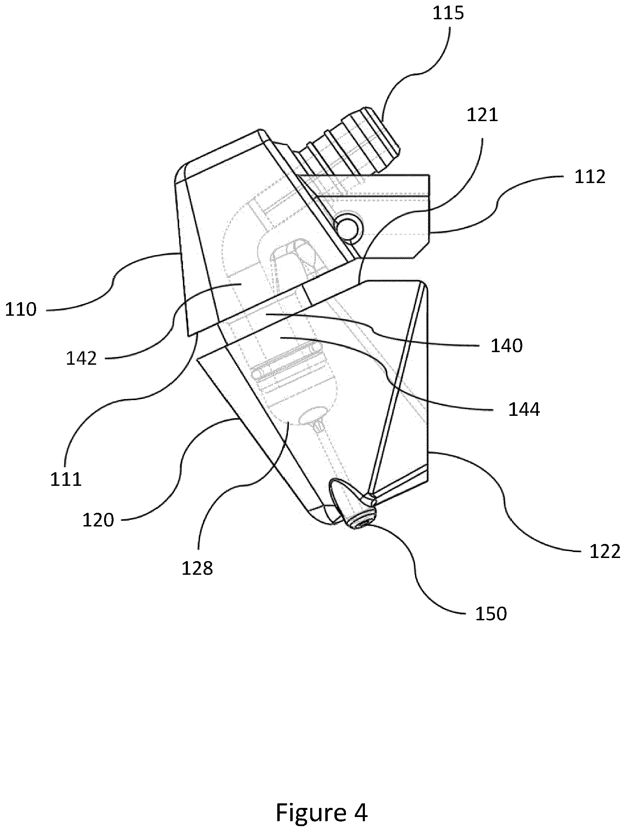

Figure 4 shows a side view of the first part 110 coupled with the second part 120 (the mounting part 130 is not shown). The second part 120 has a second surface 122 arranged to abut a portion of the housing 162 of the camera 160, such that lateral movement and rotation of the second part 120 relative to the housing 162 is prevented, thereby retaining the second part 120 in a desired position relative to the mounting part 130 and the housing 162 of the camera 160. The first part 110 similarly has a second surface 112 arranged to abut another portion of the housing of the camera 160 (i.e., a different portion of the housing of the camera 160 than the second part 120, such as a ledge 164 of the camera housing 162 shown in Figures 2 and 3), such that the first part 110 can be retained in a desired position relative to the mounting part 130 and the housing 162 of the camera 160.

The first part 110 has a connector 115 for connecting to the tube 190 which supplies fluid from a fluid reservoir. The second part 120 has at least one nozzle 150 arranged to spray fluid towards the lens or optical window 170 of the camera 160. When the first part 110 and the second part 120 are removably coupled together, a continuous duct 140 is formed between the first part 110 and the second part 120, such that fluid received at the connector 115 can pass uninterrupted through the first part 110 to the second part 120 and out of the nozzle 150 towards the lens 170 of the camera 160.

The continuous duct 140 is formed from a first internal fluid channel 142 running through the first part 110 and a second internal fluid channel 144 running through the second part 120. The first internal fluid channel 142 extends through the plug 116 and the second internal fluid channel 144 extends from the socket 125 such that fluid can pass uninterrupted from the first part 110 to the second part 120 when the first part 110 and the second part 120 are removably coupled together.

As illustrated by Figures 1 and 4, the first part 110 may be "elbow-shaped". The first internal fluid channel 142 may adopt a complimentary elbow-shape within the first part 110 to redirect fluid flow received via connector 115 towards plug 116 (and ultimately towards the lens or optical window 170 of the camera 160 via the second part 120).

While Figures 1 and 4 illustrate the connector 115 as a push-fit connector having a number of circumferential ribs, the skilled person would appreciate that other types of connector would be equally suitable for facilitating secure attachment of the tube 190 to the first part 110.

The socket 125 may have an end cap 128 defining an end of the socket 125 furthest from the first face 121 of the second part 120. The end cap 128 is fluidically connected to the nozzle 150 to allow fluid to flow through the second part 120 via the second internal fluid channel 144 and out through the nozzle 150 towards the lens or optical window 170 of the camera 160. The end cap 128 is shaped so as to direct fluid flow received via the plug 115 towards the nozzle 150. While Figure 4 shows that the end cap 128 may be bowl shaped, such that fluid collects at a lowest point of the end cap 128 to be transferred to the nozzle 150, the end cap 128 may alternatively be conically shaped, or any other suitable shape that allows for fluid to collect under gravity at the lowest point of the end cap 128.

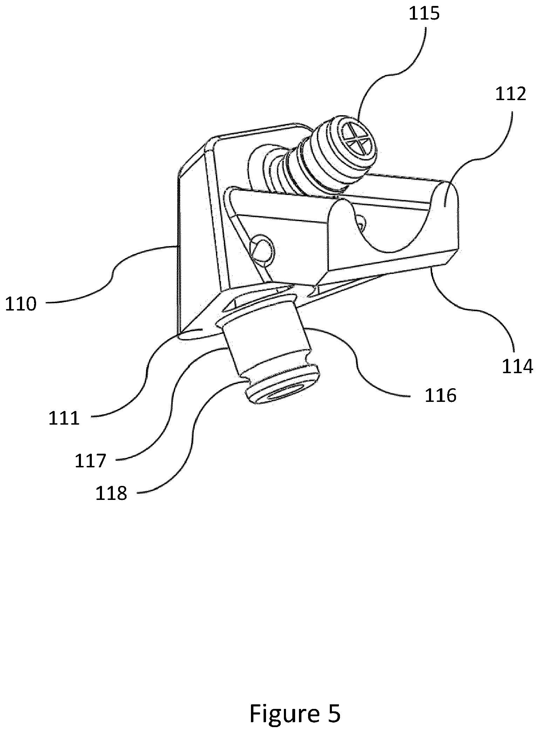

Figure 5 is a perspective view of the first part 110, showing how the first part 110 has a protrusion 114 that extends from the first part 110 in the same direction as the connector 115. The protrusion 114 is arranged to sit on a ledge 164 of the housing 162 (see, e.g., Figure 3) when the first face 111 of the first part 110 abuts the surface of the mounting part 130 that faces away from the camera 160, thereby further improving the stability of the washer assembly 100. The protrusion 114 may be shaped so as not to obstruct connection of the fluid supply 190 to the connector 115. For example, the protrusion 114 may be recessed to permit connection of a cylindrical hose to connector 115.

Figure 5 also shows in more detail how the plug 116 extends from the first surface 111 of the first part 110. The plug 116 has a circumferential groove 118 formed in an outer surface 117 of the plug 116 shaped to at least partially accommodate the sealing means 180 (shown in Figure 1), such that the sealing means 180 is resiliently biased between the outer surface 117 of the plug 116 and an inner surface 126 of the socket 125 when the first part 110 and the second part 120 are removably connected, thereby preventing fluid leaks.

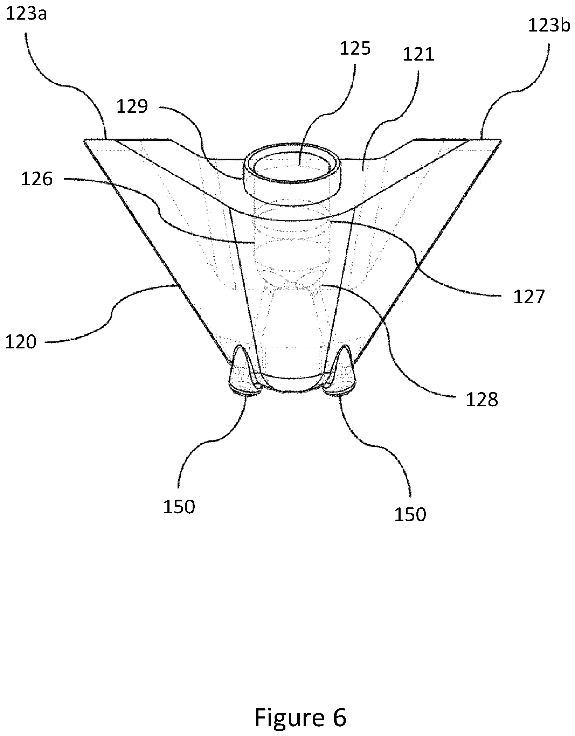

Figure 6 is a perspective view of the second part 120, showing a pair of wings 123a, 123b extending from either side of the second face 122 of the second part 120. The separation between the pairs of wings 123a, 123b defines a widest point of the second face 122, such that when the second face 122 abuts the housing 162 of the camera 160 (when the second part 120 is removably coupled to the first part 110 via the mounting part 130), the pair of wings 123a, 123b contact the housing 162 of the camera such that relative movement of the second face 122 against the housing 162 of the camera is substantially prevented. In other words, the second part 120 is prevented from rocking against the housing 162 of the camera 160, e.g., if buffeted by a wave or strong winds.

The socket 125 of the second part 120 may have a circumferential groove 127 formed into an inner surface 126 of the socket 125. The circumferential groove 127 is shaped, together with the circumferential groove 118 of the plug 116, to at least partially accommodate the sealing means 180, such that the sealing means 180 is resiliently biased between the outer surface 117 of the plug 116 and the inner surface 126 of the socket 125 when the first part 110 and the second part 120 are removably connected, thereby preventing fluid leaks.

Figure 6 illustrates that the second part may have a pair of nozzles 150, each of which being fluidically connected to the end cap 128 of the socket 125. By providing a pair of nozzles 150, the fluid can be directed onto a greater surface area of the lens or optical window 170 of the camera 160, thereby enhancing cleaning of the lens 170. Whilst Figure 6 shows a pair of nozzles 150, the skilled person would appreciate that the second part 120 could be modified to include any suitable number of nozzles, as required.

The second part 120 also has a collar 129 extending outwards from the socket 125 in the first face 121 of the second part 120. The collar 129 is arranged to sit within the aperture 134 formed through the mounting part 130 when the first face 121 of the second part 120 abuts the camera facing surface 131 of the mounting part 130. As such, the stability of the washer assembly 100 is further increased as relative lateral movement between the second part 120 and the mounting part 130 is substantially prevented owing to the collar 129 nesting within the aperture 134 of the mounting part 130.

The washer assembly 100 may comprise a filter (not shown) for filtering fluid flow received from the fluid supply 190, for example to remove debris and contaminants. The filter may be disposed within the first part 110, the second part 120, or within the fluid supply 190 itself. Optionally, the first part 110 and the second part 120 may both comprise filters.

The first part 110 and/or the second part 120 of the washer assembly 100 may be formed from 3D printed material. For example, one or both of the first part 110 and the second part 120 may be formed from 3D printed stainless steel, thereby enhancing resistance to rusting in a marine environment.

Although the invention has been described in terms of certain preferred embodiments, the skilled person will appreciate that various modifications could be made which still fall within the scope of the appended claims.

## Claims

1. A washer assembly for a camera mounted on a vessel, the washer assembly comprising:
a first part connectable to a fluid supply;
a second part comprising a nozzle configured to spray fluid towards an optical surface of the camera; and
a mounting part couplable to a housing of the camera;
wherein the first part and the second part are configured to be removably coupled via the mounting part wherein, when coupled, the first part and the second part abut opposing faces of the mounting part and a continuous duct is formed between the first part and the second part.

2. The washer assembly of claim 1, wherein the opposing faces of the mounting part comprise a surface facing towards the camera and a surface facing away from the camera.

3. The washer assembly of claim 2, wherein the second part comprises:
a first face configured to abut the surface of the mounting part facing towards the camera; and
a second face configured to abut a portion of the housing adjacent to the camera, optionally wherein the second part is widest where the second face of the second part meets the first face of the second part.

4. The washer assembly of claim 3, wherein the second face of the second part comprises a pair of wings that extend either side of the surface of the mounting part facing towards the camera, and wherein the pair of wings contact a portion of the housing adjacent to the camera.

5. The washer assembly of any of claims 2 to 4, wherein the first part comprises:
a first face configured to abut the surface of the mounting part facing away from the optical surface of the camera; and
a second face configured to abut a second part of the housing of the camera.

6. The washer assembly of any preceding claim, wherein the first part has a protrusion configured to sit on a ledge of a camera housing.

7. The washer assembly of any preceding claim, wherein the continuous duct is defined by a first internal fluid channel formed through the first part, a second internal fluid channel formed through the second part, and an aperture formed through the mounting part.

8. The washer assembly of claim 7, wherein:
the first part comprises a plug containing at least a portion of the first internal fluid channel;
the second part comprises a socket, the socket comprising at least a portion of the second internal fluid channel; wherein
the plug is configured to be inserted through the aperture formed through the mounting part into the socket to removably couple the first part and the second part via the mounting part.

9. The washer assembly of claim 7 or claim 8, wherein the washer assembly further comprises sealing means arranged to form a fluid-tight seal between the plug and the socket, optionally wherein the sealing means is disposed at least partially within a circumferential groove in either a surface of the plug or a surface of the socket.

10. The washer assembly of any of claims 8 or 9, wherein the socket has an end cap with the nozzle extending from the end cap, optionally wherein the end cap is curved in order to direct fluid flow towards the nozzle.

11. The washer assembly of any of claims 7 to 10, wherein the second part comprises a collar configured to sit within the aperture of the mounting part.

12. The washer assembly of any preceding claim, wherein the first part is removably connectable to a hose and is shaped to direct fluid flow received from the hose towards the second part.

13. The washer assembly of any preceding claim, wherein the washer assembly further comprises a filter for filtering fluid flow received from the hose.

14. The washer assembly of any preceding claim, wherein the first part and/or the second part are formed from 3D printed material, preferably stainless steel.

15. A device for washing a camera mounted on a vessel, the device comprising:
a first part connectable to a fluid supply; and
a second part comprising a nozzle configured to spray fluid towards an optical surface of the camera;
wherein the first part and the second part are configured to be removably coupled abutting opposing faces of a mounting part on the camera such that a continuous duct for conveying fluid is formed between the first part and the second part.
